# EUROPEAN PATENT SPECIFICATION

(11) **EP 2 549 679 B1**
(45) Date of publication and mention of the grant of the patent: **05.09.2018**
(21) Application number: 12176177.9
(22) Date of filing: 12.07.2012
(51) Int. Cl.: H04L 12/10, H04L 12/40, H04B 3/54, G05F 1/613, G05F 1/46

(54) **DEVICE FOR EXTRACTING A SUPPLY SIGNAL FROM A BUS SIGNAL, AND BUS APPARATUS**
VORRICHTUNG ZUR EXTRAKTION EINES VERSORGUNGS-SIGNALS VON EINEM BUSSIGNAL, UND BUSGERÄT
DISPOSITIF POUR EXTRAIRE UN SIGNAL D'ALIMENTATION D'UN SIGNAL DE BUS, ET APPAREIL DE BUS

(30) Priority: 19.07.2011 BE 201100464
(43) Date of publication of application: 23.01.2013
(73) Proprietor: Niko NV, 9100 Sint-Niklaas (BE)
(72) Inventor: Veldeman, Pol Raymond Diane, 9140 Temse (BE); De Brabander, Gino Dora Clement, 9112 Sinaai (BE)
(74) Representative: D'Halleweyn, Nele Veerle Trees Gertrudis

(56) References cited:
- EP-A2- 2 190 094
- WO-A1-2007/130017

## Description

The present invention relates to a device for extracting a supply signal from a bus signal on a bus, and in particular on a so-called power supply decoupler. The invention further relates to a bus apparatus comprising such a device.

In existing two-wire bus systems the supply signal and the data signal are combined on the same wires. It is consequently necessary to provide a device in a bus apparatus connected to such a bus system for the purpose of separating the supply signal from the data signal. The existing bus apparatuses use power supply decouplers which are either not very efficient or do not allow a large number of bus apparatuses to be connected simultaneously to the bus system.

WO 2007/130017 discloses a bus loop power interface comprising a voltage control module receiving a loop voltage and generating a predetermined supply voltage, an impedance control module coupled to the voltage control module, with the impedance control module receiving a loop current and generating a predetermined supply current, and a feedback coupled between the voltage control module and the impedance control module. The feedback provides a feedback signal to the voltage control module that enables the voltage control module to substantially maintain the predetermined supply voltage.

The present invention has for its object to provide a device and bus apparatus of the type stated in the preamble with which the supply signal is extracted in improved manner from the bus signal, wherein modulation of a data signal on the bus is hardly distorted. Embodiments of the device and the bus apparatus according to the invention preferably allow the simultaneous connection of quite a large number of bus apparatuses to the bus.

The invention provides for this purpose a device of the type stated in the preamble intended for use with a bus having a first and a second wire. The device has the features of claim 1. The device is provided with a first and a second input intended for connection to the first and second wire. The device comprises a conversion circuit adapted and connected to the first and second inputs such that a current is extracted from the bus for the purpose of providing a voltage signal to a linear or switching power supply; and a compensation circuit adapted to change the impedance when the current extracted from the bus falls below a determined threshold, typically as a result of the presence of modulation signals in the bus signal.

At the moment that the current in the bus drops in such a device, typically as a result of modulation of a data signal on the bus, this drop in current will be at least partially compensated in that the compensation circuit will change, in particular decrease, the impedance between the first and second inputs in appropriate manner. Any appreciable distortion of the data signal on the bus can be avoided or reduced as a result.

Is further noted that in the case of a non-polarized two-wire bus the first and second inputs will typically not be directly connected to the first and second wires of the bus, but via a rectifier circuit.

The compensation circuit is adapted to measure the current extracted from the bus and to utilize, as a function of this current measurement, a determined dummy load between the first and second inputs. This dummy load will then draw additional current at the moment the current extracted from the bus has fallen below a determined threshold.

A typical bus apparatus has a determined maximum or average consumption. According to an advantageous embodiment, the compensation circuit is adapted to change the impedance such that the current extracted from the bus provides for substantially the maximum or average consumption. In other words, a current drop resulting from the presence of a modulation signal in the bus signal will be immediately compensated in such a device.

The compensation circuit comprises a measuring circuit for generating a measurement signal which is a function of the current extracted from the bus, and a load circuit which is coupled to the measuring circuit and which is connected to the first and second inputs such that a dummy load which is a function of the value of the measurement signal is created between the first and second inputs. It will in this way thus be possible to at least partially compensate a current drop in that the load circuit will begin to draw current as a function of the measurement signal.

The measuring circuit and dummy load are preferably adapted, when the measurement signal enters a determined range, to draw a current from the bus which is substantially equal to a first current extracted from the bus before the measurement signal entered this determined range.

According to a preferred embodiment, the measuring circuit is adapted to measure the current extracted from the bus and to activate the dummy load to greater or lesser extent subject to this current measurement. A dummy load of a determined value can in this way thus be utilized very precisely as a function of the measured current. The measuring circuit and dummy load can for instance be adapted such that, when a measurement signal is generated, the dummy load draws a current which is a function of the current measured prior to generation of the measurement signal.

According to a possible embodiment, the dummy load comprises one or more of the following elements: at least one resistor, or at least one current source or at least one current mirror, or at least one transistor, or a combination thereof. In the case where the dummy load comprises a current mirror, this is then preferably adapted to mirror a first current flowing through the diode prior to generation of the measurement signal such that the current flowing through the dummy load and the diode is substantially equal to this first current when the measurement signal is generated.

According to a particularly advantageous embodiment, the dummy load comprises a transistor, the conductance of which is regulated as a function of the measurement signal. The use of a transistor has the advantage that the current can be regulated very quickly by switching the transistor on/off, and particularly by switch-on thereof when the current extracted from the bus falls below a determined value.

According to a preferred embodiment, the measuring circuit comprises a differential circuit adapted to measure a differential value representative of the difference between the current extracted from the bus and the current supplied to the linear or switching power supply. The measuring circuit preferably further comprises an amplifier for amplifying the differential value, wherein this amplified differential value forms the measurement signal for the purpose of controlling the load circuit.

According to a possible embodiment, the differential circuit is a resistor circuit with a first and a second branch between the second input and the linear or switching power supply. The first branch comprises at least two resistors and is connected between two resistors of the first branch to a reference voltage. The second branch comprises at least two resistors and is connected between these at least two resistors to an input of the amplifier. Through the use of such a resistor circuit a voltage signal can be supplied to the input of the amplifier that is representative of the difference between the current extracted from the bus and the current supplied to the linear or switching power supply.

According to an advantageous embodiment, the conversion circuit comprises a diode and a capacitor. The diode and capacitor are connected to the first input and the second input such that during use a current in the first or second wire can charge the capacitor for the purpose of providing a voltage signal to a linear or switching power supply. The compensation circuit is then preferably adapted to change the impedance when the voltage over the diode falls below a determined threshold.

A good compensation can in this way be obtained in the case the diode is blocked or draws only a very low current. Note that a very small voltage drop over the diode can have the result that the current becomes negligible compared to the current flowing through the diode in the conductive state. This drop can thus be compensated in that the dummy load begins to draw current. The effect of the diode being blocked will in this way not distort modulation, or hardly so.

Note that the term "diode" refers in the context of the present invention to an element or a combination of elements wherein it is understood that the element or combination of elements display the behaviour that a small variation in the voltage over the element results in a great variation in the current through the element, and so can for instance also be a transistor connected as diode.

According to a preferred embodiment, the device is a power supply decoupler which further comprises the linear or switching power supply for the purpose of converting the supplied voltage signal to a stable supply signal. This stable supply signal can be employed to power all manner of components, typically components provided together with the power supply decoupler in a bus apparatus.

According to a preferred embodiment, the diode, optionally in series with a resistor, has a first connection point which is connected to the first input and a second connection point intended for connection to the linear or switching power supply. The capacitor is then preferably connected in series to the diode between the first input and the second input. A highly compact and efficient device is in this way provided.

The invention further comprises a bus apparatus incorporating an embodiment of a device as described above. Such bus apparatuses will allow parallel connection of a relatively large number of bus apparatuses to the same bus without this having adverse consequences for the data signals on the bus.

According to an advantageous embodiment, the bus apparatus is intended for use on a non-polarized bus and the bus apparatus further comprises a rectifier circuit between the non-polarized bus and the first and second inputs of the device.

According to a possible embodiment, the bus apparatus comprises a power supply decoupler as described above and a microcontroller powered by the stable supply signal from the power supply decoupler.

The bus apparatus can further comprise a receiving circuit adapted to measure a data signal in the bus signal and/or a modulation circuit adapted to modulate a data signal in the bus signal and/or apparatus-specific modules in accordance with the task of the bus apparatus.

The present invention will be further elucidated on the basis of a number of by no means limitative exemplary embodiments of a device and a bus apparatus according to the invention with reference to the accompanying drawings. In the drawing:
Figure 1A shows a block diagram of an electrical system, in particular a domotic system, in which an embodiment of a bus apparatus according to the invention can be used;
Figure 1B shows an electrical circuit diagram for the purpose of illustrating a problem of the power supply decoupler of figure 3A of the prior art;
Figure 2 shows a block diagram of an embodiment of a bus apparatus according to the invention;
Figures 3A, 3B and 3C show three possible embodiments of a prior art power supply decoupler;
Figure 4 shows a block diagram of an embodiment of a device according to the invention; and
Figure 5 shows a block diagram of a detailed embodiment of a device according to the invention.

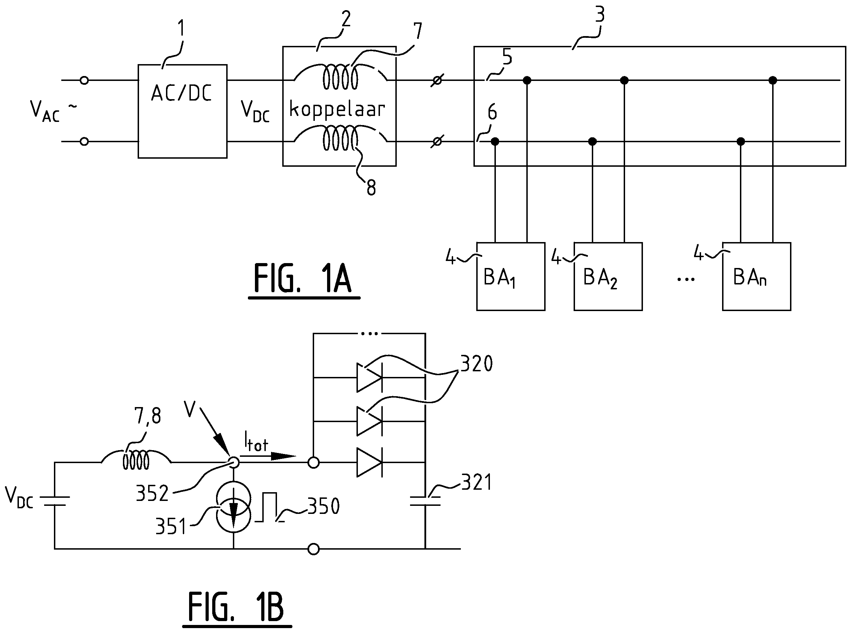

Figure 1 illustrates a two-wire bus system 3 for power supply to and communication with a number of bus apparatuses 4 in an electrical system, for instance an automation or domotic system in a building. In such an electrical system an alternating voltage V_{AC}, for instance the mains voltage, will typically first be converted to a direct voltage V_{DC}, using a converter 1. This direct voltage V_{DC} is applied between the wires 5, 6 of the two-wire bus system 3, preferably a two-wire non-polarized bus system. A coupler 2 with coils 7, 8 is provided to enable communication between bus apparatuses 4. In such a two-wire bus system the supply signal and the data signal are combined on the same wires 5, 6. A device is therefore necessary in bus apparatuses 4 to separate the supply signal and the data signal from each other.

Such a bus apparatus 4 is understood to mean any apparatus or appliance which can be coupled to bus 3. Examples of such a bus apparatus are a light switch, a socket outlet, a DIN rail module, a thermostat, a display screen with one or more buttons, a light control and so on. These can for instance be bus apparatuses which can be coupled to the bus of an automation or domotic system in a building such as a dwelling or an industrial premises.

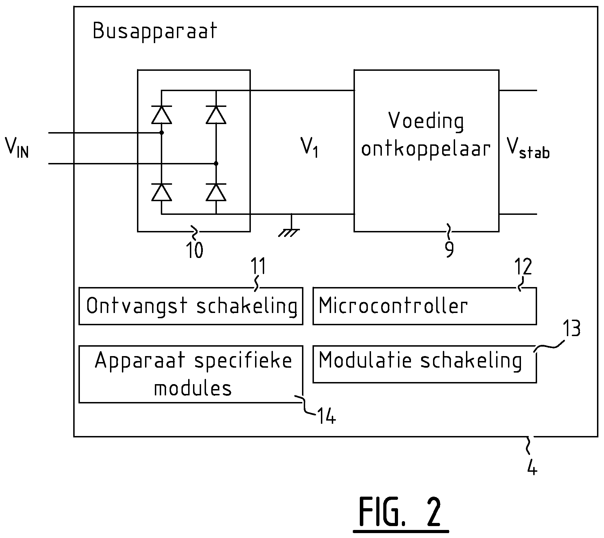

An exemplary embodiment of a bus apparatus 4 is shown in figure 2. A bus apparatus 4 typically comprises a rectifier circuit 10 adapted to rectify the input signal V_{IN} for the purpose of providing a rectified signal V₁. This rectified signal V₁ is supplied to a power supply decoupler 9 which is adapted to extract power from two-wire bus 3 with negligible distortion of the data signal superposed on the supply signal. It is therefore the intention to provide at the output of power supply decoupler 9 a stable constant voltage V_{STAB} which can be used to power diverse components of the bus apparatus, such as for instance microcontroller 12 and/or one more apparatus-specific modules 14. A bus apparatus typically further comprises a receiving circuit 11 adapted to measure the data signal superposed on the supply signal on two-wire bus 3, and a modulation circuit 13 for modulating a data signal on the bus under the control of microcontroller 12. Receiving circuit 11 will typically supply an output signal which is transmitted to microcontroller 12 for the purpose of controlling the apparatus-specific modules 14 of bus apparatus 4. An example of a particularly advantageous receiving circuit is described in the patent application with the title "Measuring device for measuring a modulation signal on a non-polarized bus, and bus apparatus comprising such a measuring device", which application was filed on 28 January 2011 with application number BE 2011/0054.

Note that the invention can be applied to both a polarized and a non-polarized bus system. In the case of a polarized bus the rectifier circuit 10 will not be necessary.

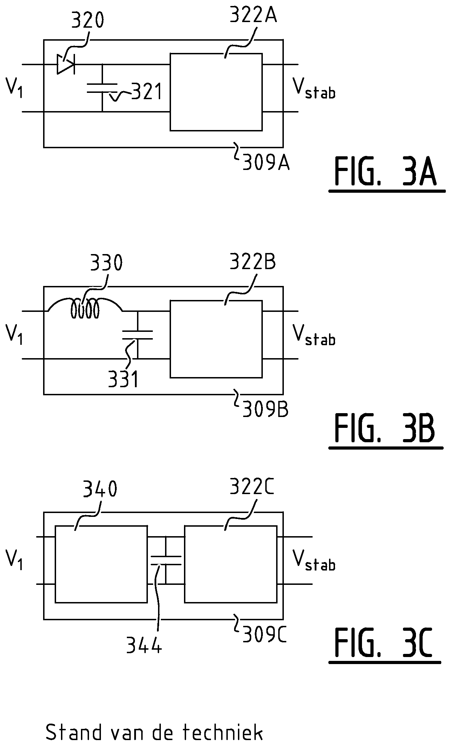

For a better understanding of the present invention three possible embodiments of the prior art power supply decoupler will now be discussed with reference to figures 3A, 3B and 3C. Figure 3A illustrates a first embodiment 309A in which the input voltage V₁ is converted via a diode 320, a capacitor 321 and a linear or switching power supply 322A to a stabilized power supply V_{STAB}. Such an embodiment has the advantage that the circuit operates very simply and efficiently. However, when a large number of bus apparatuses 4 are connected to the bus, problems can occur because the overall DC current drawn by all bus apparatuses 4 can then become greater than the available modulation current, with the result that the modulation is distorted or annihilated. This problem is illustrated in the electric circuit diagram of figure 1B. The current required for modulation is represented schematically by power source 351. If this current suddenly increases, see reference numeral 350, the voltage at point 352 will fall as a result of coils 7, 8, which can result in blocking of diodes 320 or in a considerable reduction in the current flowing through these diodes 320, with the consequence of a considerable distortion of the data signal when multiple apparatuses are connected in parallel to the bus and are in operation simultaneously.

A second possible embodiment of the prior art power supply decoupler 309B is illustrated in figure 3B and comprises a coil 330, a capacitor 331 and a linear or switching power supply 322B. Such an embodiment is highly efficient but has the drawback that, as a result of the presence of coil 330, the component is typically relatively large and consequently not suitable for small bus apparatuses. In addition, the number of bus apparatuses connected in parallel to the two-wire bus 3 will typically be limited in such an embodiment.

Finally, figure 3C shows a further third embodiment of an existing power supply decoupler 309C comprising a linear voltage regulator 340 with a low input capacitance, a capacitor 344 and a linear or switching power supply 322C. This third embodiment has the advantage of being simple and compact and that a large number of bus apparatuses in parallel are possible on bus 3. The efficiency of use of the energy from the bus in the bus apparatus of such an embodiment is however typically limited as a result of the presence of the linear voltage regulator.

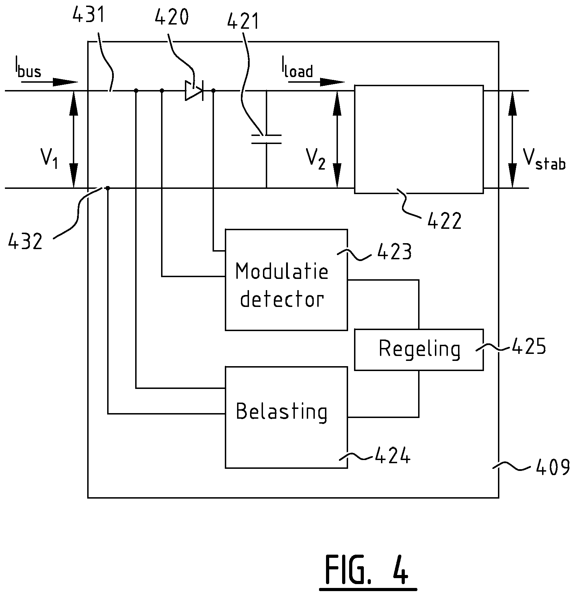

An embodiment of the invention will now be discussed with reference to figure 4. Figure 4 shows an embodiment of a power supply decoupler 409 according to the invention. Power supply decoupler 409 comprises a device for extracting a supply signal V₂ from a typically rectified bus signal V₁. The device has a first and a second input 431, 432 intended for connection, optionally via a rectifier circuit, to a first and second wire 5, 6 of bus 3. Power supply decoupler 409 comprises a diode 420 and a capacitor 421. Diode 420 is connected for the purpose of drawing current from the bus and thus charging the capacitor 421. The voltage signal V₂ over capacitor 421 is supplied to a linear or switching power supply 422. A measuring circuit, also referred to as a modulation detector, 423 is further provided for generating a determined measurement signal when the voltage over the diode falls below a determined threshold or in the case of a determined current drop in the current I_{BUS} extracted from the bus. Modulation detector 423 is coupled via a control 425 to a load circuit 424 for creating a dummy load between the first and the second inputs 431, 432 when the voltage over the diode (or the current I_{BUS} through the diode) falls below a predetermined threshold. Note that this threshold can be a variable quantity. According to an advantageous embodiment, a dummy load is utilized when the current I_{BUS} falls below the current I_{LOAD} supplied to power supply 422.

The load 424 can for instance be adapted, when the measurement signal is generated, to draw a current substantially equal to a first current flowing through the diode prior to generation of the measurement signal. The modulation detector can further also be adapted to measure the current through the diode and to utilize the dummy load subject to this current measurement. According to a particularly advantageous embodiment, modulation detector 423 and load 424 can be adapted such that, when a measurement signal is generated, the load draws a current which is a function of the current measured prior to generation of the measurement signal. The load comprises for instance one or more of the following components: one or more resistors and/or one or more power sources and/or one or more transistors and/or a current mirror. The current mirror is then preferably adapted to mirror a first current flowing through diode 420 prior to generation of the measurement signal such that, following generation of the measurement signal, the current through load 424 and diode 420 is substantially equal to this first current.

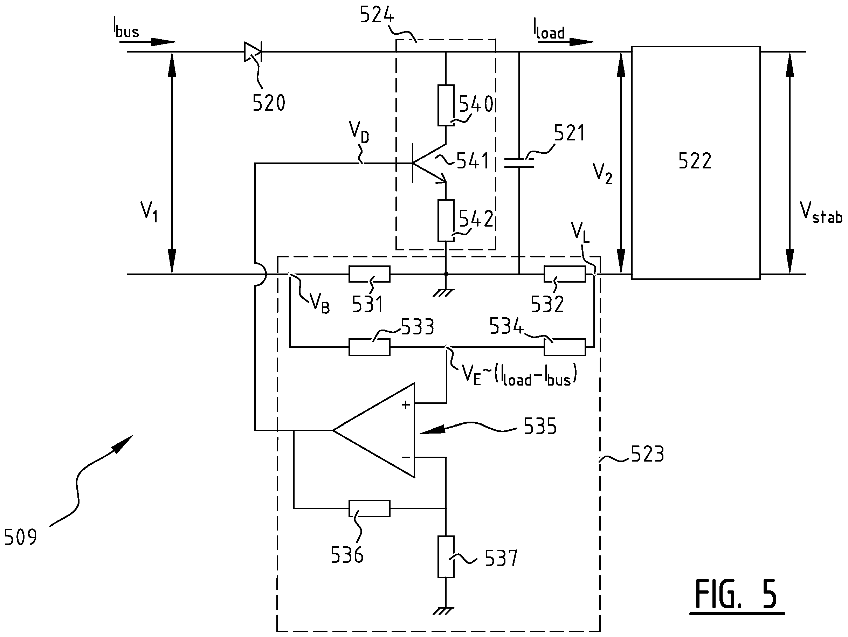

Finally, a more detailed embodiment of the invention will be discussed with reference to figure 5. Figure 5 illustrates an embodiment of a power supply decoupler 509 for converting a typically rectified bus signal V₁ to a supply signal V_{STAB}. Power supply decoupler 509 comprises a conversion circuit for extracting a current I_{BUS} from the bus in order to supply a supply signal V₂ to a linear or switching power supply 522. This conversion circuit comprises a diode 520 and a capacitor 521 similar to the diode 420 and capacitor 421 which have been discussed in the context of figure 3 and will not be further elucidated here. Further provided is a compensation circuit with a load circuit 524 and a measuring circuit 523.

Measuring circuit 523 comprises a resistor circuit 531-534 and an amplifier 535. The values of resistors 531, 532 are typically several orders of magnitude smaller than the values of resistors 533, 534 such that substantially the current I_{LOAD} flows through resistor 532 and substantially the current I_{BUS} flows through resistor 531. When resistors 531 and 532 and resistors 533 and 534 have an equal value, the value of the voltage V_{E} between resistors 533 and 534 will be proportional to (I_{LOAD}-I_{BUS}).

Load circuit 524 comprises a transistor 541. This is connected in parallel to capacitor 521 via resistors 540, 542. Measuring circuit 523 provides a measured voltage V_{E} which is used to control the conductance of transistor 541. When transistor 541 is not conductive, the current extracted from the bus is I_{BUS} = I_{LOAD}. When this current I_{BUS} falls below the value of current I_{LOAD}, the voltage V_{E} increases, and so also the voltage V_{D}. Transistor 541 will hereby be conductive, whereby the impedance between the first and the second input falls and so more current will be drawn from the bus. This current compensation will therefore continue until the current I_{BUS} extracted from the bus is again equal to the current I_{LOAD} provided to power supply 522. An accurate compensation is in this way obtained with a relatively simple and inexpensive circuit. Note that the skilled person will appreciate that a more complex embodiment with even higher accuracy can also be envisaged in the context of the present invention.

The power supply decoupler 409 described with reference to figure 4 or figure 5 can be used in advantageous manner in the bus apparatus of figure 2 or other random bus apparatus.

The skilled person will appreciate that many modifications and additions can be envisaged within the scope of the present invention which is by no means limited by the above exemplary embodiments. The scope of protection is defined solely by the following claims.

## Claims

1. Device for extracting a supply signal from a bus signal on a bus (3) having a first and a second wire (5, 6) which device is provided with a first input (431) and a second input (432) intended for connection to the first and second wire of the bus, wherein the device has an impedance between the first and second input, which device comprises:
- a conversion circuit (420, 421); (520, 521) adapted and connected to the first and second inputs (431, 432) such that a current (_{Ibus}) is extracted from the bus for the purpose of providing a voltage signal (V₂) to a linear or switching power supply converter (422); (522); **characterized in that** the device further comprises:
- a compensation circuit (423, 424); (523, 524) adapted to decrease the impedance when the current extracted from the bus falls below a determined threshold, such that this drop in current is at least partially compensated; wherein the compensation circuit comprises:
- a measuring circuit (423); (523) for generating a measurement signal which is a function of the current extracted from the bus; and
- a load circuit (424); (524) which is coupled to the measuring circuit and which is connected to the first and second inputs such that a dummy load is created between the first and the second input (431, 432) as a function of the value of the measurement signal.

2. Device as claimed in claim 1, **characterized in that** the dummy load and the measuring circuit are adapted, when the measurement signal enters a determined range, to draw a current from the bus which is substantially equal to a first current extracted from the bus before the measurement signal entered this determined range.

3. Device as claimed in either of the claims 1 or 2, **characterized in that** the measuring circuit and dummy load are adapted such that the dummy load draws a current which ensures that the current extracted from the bus is almost always substantially equal to the current supplied to the linear or switching power supply.

4. Device as claimed in any of the claims 1-3, **characterized in that** the dummy load comprises one or more of the following elements: at least one resistor and/or at least one transistor and/or at least one current source and/or at least one current mirror.

5. Device as claimed in any of the claims 1-4, **characterized in that** the dummy load comprises a transistor, the conductance of which is regulated as a function of the measurement signal V_{D}).

6. Device as claimed in any of the claims 1-5, **characterized in that** the measuring circuit comprises a differential circuit (531, 532, 533, 534) adapted to measure a differential value representative of the difference between the current (I_{bus}) extracted from the bus and the current (I_{load}) supplied to the linear or switching power supply (422); (522).

7. Device as claimed in claim 6, **characterized in that** the measuring circuit comprises an amplifier (535) for amplifying the differential value, wherein this amplified differential value forms the measurement signal for the purpose of controlling the load circuit.

8. Device as claimed in claim 6 or 7, **characterized in that** the differential circuit is a resistor circuit (531-534) with a first and a second branch between the second input and the linear or switching power supply, wherein the first branch comprises at least two resistors and is connected between these at least two resistors to a reference voltage, and wherein the second branch comprises at least two resistors and is connected between these at least two resistors to an input of the amplifier (535).

9. Device as claimed in any of the foregoing claims, **characterized in that** the conversion circuit comprises:
- a diode (420); (520) and a capacitor (421); (521); wherein the diode and capacitor are connected to the first and second input (431, 432) such that during use a current in the bus can charge the capacitor for the purpose of providing a voltage signal (V₂) to a linear or switching power supply.

10. Device as claimed in claim 9, **characterized in that** the compensation circuit is adapted to generate a measurement signal when the voltage over the diode falls below a determined threshold.

11. Device as claimed in either of the claims 11 or 12, **characterized in that** the diode (420); (520), optionally in series with a resistor, is connected between the first input (431) and the linear or switching power supply (422); (522).

12. Device as claimed in any of the foregoing claims, **characterized in that** the device further comprises the linear or switching power supply (422); (522) for the purpose of converting the voltage signal (V₂) to a stable supply signal (V_{STAB}).

13. Bus apparatus comprising a device as claimed in any of the foregoing claims.

## Patentansprüche

1. Vorrichtung zum Extrahieren eines Versorgungssignals aus einem Bussignal auf einem Bus (3) mit einer ersten und einer zweiten Leitung (5, 6) aufweist, welche Vorrichtung mit einem ersten Eingang (431) und einem zweiten Eingang (432) versehen ist, die für eine Verbindung mit dem ersten und dem zweiten Leitung des Busses vorgesehen sind, wobei die Vorrichtung eine Impedanz zwischen dem ersten und dem zweiten Eingang aufweist, wobei die Vorrichtung umfasst:
- eine Umsetzungsschaltung (420, 421); (520, 521), die angepasst und mit dem ersten und dem zweiten Eingang (431, 432) verbunden ist, so dass ein Strom (_{Ibus}) aus dem Bus extrahiert wird zum Zweck des Bereitstellens eines Spannungssignals (V₂) an einen linearen oder schaltenden Stromversorgungskonverter (422); (522), **dadurch gekennzeichnet, dass** die Vorrichtung ferner umfasst:
- eine Kompensationsschaltung (423, 424); (523, 524), die angepasst ist, um die Impedanz zu vermindern, wenn der aus dem Bus extrahierte Strom unter einen bestimmten Schwellenwert abfällt, so dass dieser Stromafball zumindest teilweise kompensiert wird, wobei die Kompensationsschaltung umfasst:
- eine Messschaltung (423); (523) zum Erzeugen eines Messsignals, das eine Funktion des aus dem Bus extrahierten Stroms ist, und
- eine Lastschaltung (424); (524) die an die Messschaltung gekoppelt ist und die derart mit dem ersten und dem zweiten Eingang verbunden ist, dass eine Dummy-last zwischen dem ersten und dem zweiten Eingang (431, 432) in Abhängigkeit von dem Wert des Messsignals erzeugt wird.

2. Vorrichtung nach Anspruch 1, **dadurch gekennzeichnet, dass** die Dummy-last und die Messschaltung dafür eingerichtet sind, wenn das Messsignal in einen bestimmten Bereich eintritt, einen Strom aus dem Bus zu ziehen, der im Wesentlichen gleich einem vom Bus extrahierten ersten Strom ist, bevor das Messsignal in diesen bestimmten Bereich eingetreten ist.

3. Vorrichtung nach einem der Ansprüche 1 oder 2, **dadurch gekennzeichnet, dass** die Messschaltung und die Dummy-last derart eingerichtet sind, dass die Dummy-last einen Strom zieht, der sicherstellt, dass der aus dem Bus extrahierte Strom nahezu immer in Wesentlichen gleich dem Strom ist, welcher der linearen oder schaltenden Stromversorgung zugeführt wird.

4. Vorrichtung nach einem der Ansprüche 1 bis 3, **dadurch gekennzeichnet, dass** die Dummy-last eines oder mehrere der folgenden Elemente umfasst: zumindest einen Widerstand und/oder zumindest einen Transistor und/oder zumindest eine Stromquelle und/oder zumindest einen Stromspiegel.

5. Vorrichtung nach einem der Ansprüche 1-4, **dadurch gekennzeichnet, dass** die Dummy-last einen Transistor umfasst, dessen Leitwert in Abhängigkeit von dem Messsignal (V_{D}) geregelt wird.

6. Vorrichtung nach einem der Ansprüche 1-5, **dadurch gekennzeichnet, dass** die Messschaltung eine Differentialschaltung (531, 532, 533, 534) umfasst, die dafür eingerichtet ist, einen Differentialwert zu messen, der repräsentativ ist für die Differenz zwischen dem Strom (I_{bus}), der aus dem Bus extrahiert wird, und dem Strom (I_{load}), welcher der linearen oder schaltenden Stromversorgung (422); (522) zugeführt wird.

7. Vorrichtung nach Anspruch 6, **dadurch gekennzeichnet, dass** die Messschaltung einen Verstärker (535) zum Verstärken des Differentialwerts umfasst, wobei der verstärkte Differentialwert das Messsignal zur Steuerung der Lastschaltung bildet.

8. Vorrichtung nach Anspruch 6 oder 7, **dadurch gekennzeichnet, dass** die Differentialschaltung eine Widerstandsschaltung (531-534) mit einem ersten und einem zweiten Zweig zwischen dem zweiten Eingang und der linearen oder schaltenden Energieversorgung ist, wobei der erste Zweig zumindest zwei Widerstände umfasst und zwischen diesen zumindest zwei Widerständen mit einer Referenzspannung verbunden ist, und wobei der zweite Zweig zumindest zwei Widerstände umfasst und zwischen diesen zumindest zwei Widerständen mit einem Eingang des Verstärkers (535) verbunden ist.

9. Vorrichtung nach einem der vorhergehenden Ansprüche, **dadurch gekennzeichnet, dass** die Umsetzungsschaltung umfasst:
- eine Diode (420); (520) und einen Kondensator (421); (521); wobei die Diode und der Kondensator derart mit dem ersten und dem zweiten Eingang (431, 432) verbunden sind, dass während der Verwendung ein Strom in dem Bus den Kondensator zum Zweck des Bereitstellens eines Spannungssignals (V₂) an eine lineare oder schaltende Stromversorgung laden kann.

10. Vorrichtung nach Anspruch 9, **dadurch gekennzeichnet, dass** die Kompensationsschaltung aangepasst ist, ein Messsignal zu erzeugen, wenn die Spannung über die Diode unter einen bestimmten Schwellenwert abfällt.

11. Vorrichtung nach Anspruch 11 oder 12, **dadurch gekennzeichnet, dass** die Diode (420); (520), optional in Reihe mit einem Widerstand, zwischen dem ersten Eingang (431) und der linearen oder schaltenden Stromversorgung (422); (522) verbunden ist.

12. Vorrichtung nach einem der vorhergehenden Ansprüche, **dadurch gekennzeichnet, dass** die Vorrichtung ferner die lineare oder schaltende Stromversorgung (422); (522) zum Zweck des Umsetzens des Spannungssignals (V₂) zu einem stabilen Versorgungssignal (V_{STAB}) umfasst.

13. Busvorrichtung, die eine Vorrichtung nach einem der vorhergehenden Ansprüche umfasst.

## Revendications

1. Dispositif d'extraction d'un signal d'alimentation d'un signal de bus sur un bus (3) ayant un premier et un deuxième fils (5, 6), lequel dispositif est pourvu d'une première entrée (431) et d'une seconde entrée (432) destinées à être connectées aux premier et deuxième fils du bus, le dispositif ayant une impédance entre la première et la seconde entrée, lequel dispositif comprend :
- un circuit de conversion (420, 421) ; (520, 521) adapté et relié aux première et seconde entrées (431, 432) de manière à extraire un courant (I_{bus}) du bus dans le but de délivrer un signal de tension (V₂) à un convertisseur d'alimentation linéaire ou à découpage (422) ; (522) ; **caractérisé en ce que** le dispositif comprend en outre :
- un circuit de compensation (423, 424) ; (523, 524) adapté pour réduire l'impédance lorsque le courant extrait du bus tombe au-dessous d'un seuil déterminé, de manière à compenser au moins partiellement cette chute de courant ; le circuit de compensation comprenant :
- un circuit de mesure (423) ; (523) pour générer un signal de mesure qui est fonction du courant extrait du bus ; et
- un circuit de charge (424) ; (524) qui est couplé au circuit de mesure et qui est connecté aux première et seconde entrées de manière à créer une charge fictive entre la première et seconde entrées (431, 432) en fonction de la valeur du signal de mesure.

2. Dispositif selon la revendication 1, **caractérisé en ce que** la charge fictive et le circuit de mesure sont adaptés, lorsque le signal de mesure entre dans une marge déterminée, à tirer du bus un courant sensiblement égal à un premier courant extrait du bus avant que le signal de mesure ne soit entré dans cette marge déterminée.

3. Dispositif selon les revendications 1 ou 2, **caractérisé en ce que** le circuit de mesure et la charge fictive sont adaptés pour que la charge fictive tire un courant qui assure que le courant extrait du bus est presque toujours sensiblement égal au courant fourni à l'alimentation linéaire ou à découpage.

4. Dispositif selon l'une quelconque des revendications 1 à 3, **caractérisé en ce que** la charge fictive comprend au moins un des éléments suivants : au moins une résistance et/ou au moins un transistor et/ou au moins une source de courant et/ou au moins un miroir de courant.

5. Dispositif selon l'une quelconque des revendications 1 à 4, **caractérisé en ce que** la charge fictive comprend un transistor dont la conductance est régulée en fonction du signal de mesure (V_{D}).

6. Dispositif selon l'une quelconque des revendications 1 à 5, **caractérisé en ce que** le circuit de mesure comprend un circuit différentiel (531, 532, 533, 534) adapté pour mesurer une valeur différentielle représentative de la différence entre le courant (I_{bus}) extrait du bus et le courant (I_{charge}) fourni à l'alimentation linéaire ou à découpage (422) ; (522).

7. Dispositif selon la revendication 6, **caractérisé en ce que** le circuit de mesure comprend un amplificateur (535) pour amplifier la valeur différentielle, cette valeur différentielle amplifiée formant le signal de mesure dans le but de commander le circuit de charge.

8. Dispositif selon la revendication 6 ou 7, **caractérisé en ce que** le circuit différentiel est un circuit de résistances (531-534) comprenant une première et une seconde branches entre la seconde entrée et l'alimentation linéaire ou à découpage, dans lequel la première branche comprend au moins deux résistances et est connectée, entre ces au moins deux résistances, à une tension de référence, et dans lequel la seconde branche comprend au moins deux résistances et est connectée, entre ces au moins deux résistances, à une entrée de l'amplificateur (535).

9. Dispositif selon l'une quelconque des revendications précédentes, **caractérisé en ce que** le circuit de conversion comprend :
- une diode (420) ; (520) et un condensateur (421) ; (521) ; la diode et le condensateur étant connectés aux première et seconde entrées (431, 432) de sorte qu'en cours d'utilisation un courant dans le bus puisse charger le condensateur dans le but de délivrer un signal de tension (V₂) à une alimentation linéaire ou à découpage.

10. Dispositif selon la revendication 9, **caractérisé en ce que** le circuit de compensation est adapté pour générer un signal de mesure lorsque la tension sur la diode tombe en dessous d'un seuil déterminé.

11. Dispositif selon la revendication 11 ou 12, **caractérisé en ce que** la diode (420) ; (520), éventuellement en série avec une résistance, est connectée entre la première entrée (431) et l'alimentation linéaire ou à découpage (422) ; (522).

12. Dispositif selon l'une quelconque des revendications précédentes, **caractérisé en ce que** le dispositif comprend en outre l'alimentation linéaire ou à découpage (422) ; (522) dans le but de convertir le signal de tension (V₂) en un signal d'alimentation stable (V_{STABLE}).

13. Appareil de bus comprenant un dispositif selon l'une quelconque des revendications précédentes.
